# EUROPEAN PATENT APPLICATION

(11) **EP 3 048 830 A1**
(43) Date of publication of application: **27.07.2016**
(21) Application number: 15305075.2
(22) Date of filing: 23.01.2015
(51) Int. Cl.: H04W 12/06, H04W 12/08

(54) **Method, system and computer program product of wireless user device authentication in a wireless network**

(71) Applicant: ALCATEL LUCENT, 92100 Boulogne-Billancourt (FR)
(72) Inventor: Gacanin, Haris, 2018 Antwerpen (BE); Elwekeil, Mohamed, 2018 Antwerpen (BE)
(74) Representative: D'Halleweyn, Nele Veerle Trees Gertrudis

(57) **Abstract**

A wireless user device authentication method in a wireless network comprising at least one access point, where a user device attempts to access the wireless network, the method comprising the steps of; determining, based on at least an ID of said user device, whether said user device is known to said at least one access point; if said user device is known to said at least one access point: granting network access to said user device; or if said user device is not known to said at least one access point: collecting device parameters of said user device; verifying, based on said collected device parameters, whether said user device is allowed to access the network; if said user device is not allowed to access the network: denying network access to said user device; if said user device is allowed to access the network: granting network access to said user device.

## Description

### Field of Invention

Embodiments of the invention relate to the field of device authentication in a wireless network, and in particular to a method, a system and a computer program product for authenticating wireless user devices attempting to access the wireless network.

### Background

WiFi access is vulnerable to malicious attacks and intruders that may be considered severe threats to the customer and network security. Wireless signals penetrate buildings where access points (APs) are placed. Thus intruders in the neighborhood can readily pick up these signals. If the intruder was able to successfully attack a WiFi network, he might be able to get very sensitive personal information. Therefore device authentication plays a crucial role in any Wifi network security plan.

### Summary

As WiFi networks are widely deployed, automated security optimization with respect to device authentications, and consequently associations, should be considered at the operator level. In addition, managing a group of users requires a dynamic authentication procedure.

The common method for associating a device to a WLAN is by utilizing a shared key (password). This has many drawbacks because there may be a malicious intruder that can hack or steal the shared key. If the intruder was able to successfully attack a WiFi network, he might be able to get username-password combinations of online e-mail accounts, detect the content of an e-mail account or obtain username-password combination for an online bank account.

Further, MAC address filtering may be used to restrict the devices that can be associated to only a number of users depending on their MAC addresses. However, it is difficult for an end user to manually configure the AP to allow these MAC addresses. In addition, a reconfiguration of the AP is always required when any new device is introduced in the network. Moreover, a hacker can make identity theft of any of the allowed physical addresses if he was able to recognize a certified physical address by eavesdropping on the network traffic.

The object of embodiments of the invention is to provide a method and a system for authenticating a wireless user device attempting to access a wireless network, which limit the devices that can be associated to an access point (AP). Embodiments of the invention aim to provide a wireless user device authentication method, which eliminates the need for manual configuration of the access point by the end user.

According to a first aspect of the invention there is provided a wireless user device authentication method in a wireless network comprising at least one access point, where a wireless user device attempts to access the wireless network by connecting to said at least one access point, the method comprising the steps of;
- determining, based on at least an ID of said wireless user device, whether said wireless user device is known to said at least one access point;
- if said wireless user device is known to said at least one access point:
   - granting network access to said wireless user device; or
- if said wireless user device is not known to said at least one access point:
   - collecting at least one device parameter of said wireless user device;
   - verifying, based on said at least one collected device parameter, whether said wireless user device is allowed to access the network;
   - if said wireless user device is not allowed to access the network:
      - denying network access to said wireless user device;
   - if said wireless user device is allowed to access the network:
      - granting network access to said wireless user device.

Embodiments of the invention are based *inter alia* on the insight that based on an ID of the wireless user device, it can be determined whether the wireless user device is known to the network or access point and can be trusted or not. If the wireless user device is known, network access is granted. If the wireless user device is not known however, device parameters are collected in order to further identify the wireless user device and to decide whether access to the network will be granted or not. If it is determined that the device is allowed to access the network, network access will be granted, even if the wireless user device was not known to the network initially, without the need of manual configuration of an access point. If it is determined that the device is not allowed to access the network, network access will be denied to that device. As an extra precaution the network may be password protected, using for example a robust encryption scheme such as WiFi Protected Access II (WPA2). However when an intruder wants to access the network, the password can be hacked, therefore a password alone will not prevent the intruder from accessing the network.

According to a preferred embodiment the ID of said wireless user device comprises at least an associated physical address of said wireless user device, and determining, based on at least an ID of said wireless user device, whether said wireless user device is known to said at least one access point comprises comparing the associated physical address of said wireless user device with a trusted list configured to comprise physical addresses of wireless user devices allowed access to the network. This trusted list can for example be stored in the wireless access point, and contains the physical addresses (e.g. MAC addresses) of devices which are trusted and are allowed access to the network. If the ID, or physical address, of the wireless user device attempting to access the network is not in the list, then the device will not be allowed access. If the ID or physical address is in the list, than access will be granted. Besides the content of the trusted list, also the size of the list can be used to limit the amount of devices which are allowed access to the network. For example, when the list contains six entries of IDs or physical addresses and already six devices are connected to the network, in principle a seventh wireless user device attempting to connect, will be denied access.

According to an embodiment, the authentication method further comprises adding said associated physical address of said wireless user device to the trusted list if said wireless user device is allowed to access the network. This way a new wireless user device which was not known initially is added to the trusted list automatically, without the need for manual configuration of the access point, e.g. dynamic host configuration protocol (DHCP).

According to a preferred embodiment of the invention the at least one device parameter is comprised in, but not limited to the group comprising a device type, vendor, name, RSSI, operating system and version. These device parameters will allow for a more accurate identification of the wireless user device attempting to access the network, as compared to only having an ID or physical address.

According to an embodiment verifying, based on said at least one collected device parameter, whether said wireless user device is allowed to access the network comprises the steps of:
- sending said at least one collected device parameter to a network owner; and
- receiving confirmation from said network owner of whether said wireless user device is allowed to access the network or not. The network owner or network administrator is notified when an unknown wireless user device attempts to access the network. Being sent the collected device parameters of the unknown wireless user device, the network owner or administrator can check whether he is acquainted with the unknown wireless user device or not and respectively confirm whether the wireless user device is allowed to access the network, or not. Except from the device parameters, also the ID or physical address of the wireless user device attempting to access the network can be sent to the network administrator in order to identify that wireless user device. If the wireless user device is not allowed to access the network, its physical address and/or device parameters can be added to a "blacklist". Wireless user devices that are added to the blacklist will automatically be denied access to the network, instead of the process of network owner verification starting over again.

Instead of only receiving a "yes or no"-confirmation, the network owner or administrator can also be prompted with a small questionnaire relating to a certain "access level" of the wireless user device being verified. For example the network administrator can confirm to only grant access to the wireless user device for a limited amount of time, for example a few hours, a few days, etc.

According to a preferred embodiment the steps of sending the at least one collected device parameter to the network owner and receiving confirmation from said network owner of whether said wireless user device is allowed to access the network or not are performed via a software application on a computer device of the network owner. The software application offers a straightforward and user friendly platform for the access point or operator to communicate with the network administrator. By interacting with the software application the network administrator is able to confirm or reject new wireless user devices to be added to the trusted list. Therefore the trusted list is automatically kept up-to-date after simple confirmation of the network administrator, but without the need of a troublesome manual (re)configuration of a wireless access point. The software application can be a program, run on a computer, or an application run on a smartphone or tablet.

According to an embodiment of the invention, the software application is password protected and according to a further embodiment the password of the software application is sent to the network administrator via his mobile phone, whenever the network administrator needs to use the application. Therefore the software application cannot be used, even when an intruder has stolen it, without the password which is sent to the mobile phone of the network owner or administrator.

According to a preferred embodiment of the invention, the authentication method further comprises the steps of:
- if said wireless user device is known to said at least one access point and has been granted network access:
   - collecting at least one device parameter of said wireless user device;
   - verifying, based on said at least one collected device parameter, whether said wireless user device is allowed to access the network;
   - if said wireless user device is not allowed to access the network:
      - disconnecting said wireless user device from the network.

As previously mentioned, an intruder can hack a password and even make spoofing of a trusted physical address. When an intruder has hacked the network password, and even has stolen the physical address of an allowed wireless user device (spoofing), the intruder will initially gain access to the network. However, the intruder will still be identified by comparing at least one of the above mentioned device parameters of the intruder device with the corresponding device parameters of the known, trusted wireless user device of which the intruder has stolen the physical address. There is hardly any chance that comparing the device parameters of a spoofing hacker with the device parameters of the trusted wireless user device will result in a match of all the above mentioned device parameters. When not all parameters are matched, the intruder has been discovered, and he will be disconnected immediately.

According to an embodiment, the wireless network is secured by a network password, and the method further comprises the steps of:
- if said wireless user device is not allowed to access the network:
   - changing the network password.

As mentioned earlier, the network can be password protected (e.g. WPA2), however if the password is hacked or stolen, and an identity of a trusted wireless user device is also stolen by an intruder, the intruder will have gained access to the network. After checking other device parameters of the intruder device, it will become apparent that an intruder has gained access to the network, and as a safety precaution the network password will be changed, thereby disconnecting all currently connected wireless user devices, including the intruder device. The method therefore provides in a self-managing, self-healing network.

According to a preferred embodiment, the authentication method comprises the step of:
- if said wireless user device is not allowed to access the network:
   - notifying the network owner that the network password has been changed.

After changing the password because an intruder has accessed the network, the network owner is notified that the password has been changed. This notification can be carried trough via the previously mentioned software application.

According to an embodiment, notifying the network owner that the network password has been changed comprises sending a new network password to the network owner. The new network password can be sent to the network owner via the dedicated software application as discussed above, which can be password protected. Another option is to send the new network password directly to the mobile phone of the network owner. A combination of the two latter methods is also possible, where the network owner is notified via for example a message that the network password has been changed, and that he can find the new network by logging into the software application with the password that is also comprised in the message, or that is sent to the network owner in a separate message.

Notifying the network owner is a safety precaution to prevent password information from falling into the wrong hands. In this case, the network owner or administrator has to inform all trusted users that the network password has been changed, and provide them with the new password. However, it is also possible to send the new password directly to all trusted users or a group thereof, thereby relieving the network owner of the task of informing the other users himself.

The skilled person will understand that the hereinabove described technical considerations and advantages for method embodiments also apply to the below described system embodiments, *mutatis mutandis*.

According to a second aspect of the invention there is provided a wireless user device authentication system in a wireless network comprising at least one access point, where a wireless user device attempts to access the wireless network by connecting to said at least one access point, the system comprising;
- a determining unit configured for determining, based on at least an ID of said wireless user device, whether said wireless user device is known to said at least one access point;
- a granting unit configured for granting network access to said wireless user device, if said wireless user device is known to said at least one access point;
- a collecting unit configured for collecting at least one device parameter of said wireless user device, if said wireless user device is not known to said at least one access point;
- a verifying unit configured for
   verifying, based on said at least one collected device parameter, whether said wireless user device is allowed to access the network;
   denying network access to said wireless user device if said wireless user device is not allowed to access the network; and
   granting network access to said wireless user device if said wireless user device is allowed to access the network.

According to an embodiment the ID of said wireless user device comprises at least an associated physical address of said wireless user device, and the determining unit is further configured for comparing the associated physical address of said wireless user device with a trusted list configured to comprise physical addresses of wireless user devices allowed access to the network.

According to an embodiment the authentication system further comprises an adding unit, configured for adding said associated physical address of said wireless user device to the trusted list if said wireless user device is allowed to access the network.

According to a preferred embodiment, the verifying unit further comprises:
a sending unit configured for sending said at least one collected device parameter to a network owner; and
a receiving unit configured for receiving confirmation from said network owner of whether said wireless user device is allowed to access the network or not.

According to an embodiment, the collecting unit is further configured for collecting at least one device parameter of said wireless user device, if said wireless user device is known to said at least one access point; and the verifying unit is further configured for disconnecting said wireless user device from the network if said wireless user device is not allowed to access the network.

According to an embodiment of the invention, the wireless network is secured by a network password, and the authentication system further comprises a password changing unit configured for changing the network password if said wireless user device is not allowed to access the network.

According to a preferred embodiment, the authentication system further comprises a notifying unit, configured for notifying the network owner that the network password has been changed.

According to a preferred embodiment, the notifying unit is further configured for sending a new network password to the network owner.

According to a another aspect of the invention, there is provided a computer program product comprising computer-executable instructions for performing the method of any one of the claims 1 to 11, when the program is run on a computer.

According to a further aspect of the invention, there is provided a computer program comprising computer-executable instructions to perform the method, when the program is run on a computer, according to any one of the steps of any one of the methods disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a flowchart illustrating an embodiment of an exemplary authentication method according to the invention;
Figure 2 is a flowchart illustrating a further embodiment of an exemplary authentication method according to the invention;
Figure 3 illustrates schematically an embodiment of an exemplary authentication method according to the invention;
Figure 4 illustrates schematically an example of a typical home wireless network; and
Figure 5 is a flow chart illustrating another embodiment of an exemplary authentication method according to the invention.

### Description of embodiments

It is noted that method steps or system units, which are illustrated with dotted lines present steps or units that correspond with specific embodiments of the invention, as will be described below.

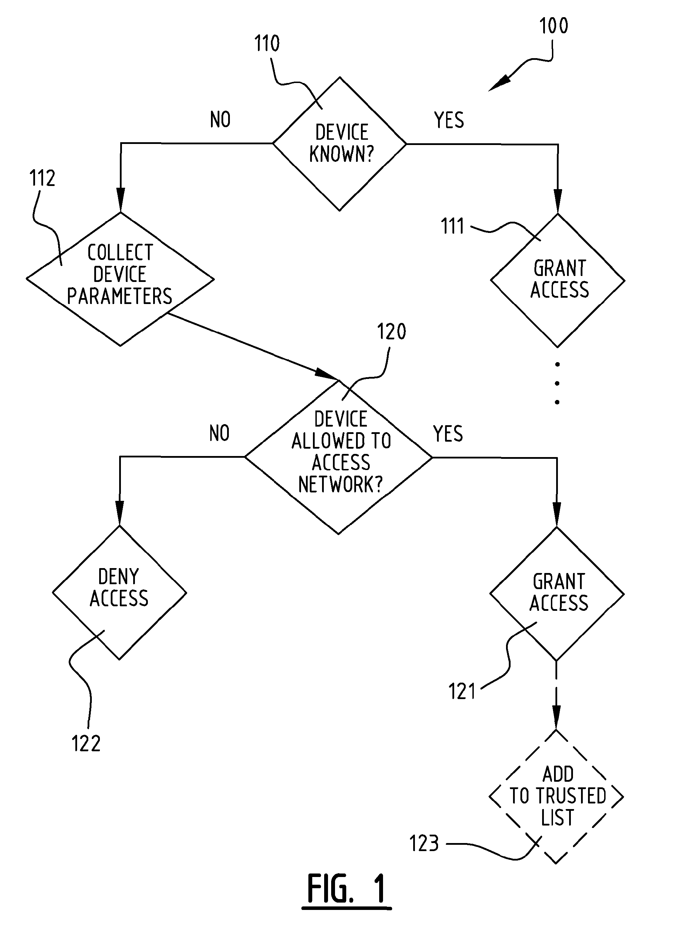

Figure 1 illustrates a wireless user device authentication method 100 in a wireless network comprising at least one access point, where a wireless user device attempts to access the wireless network by connecting to said at least one access point. The method 100 comprises a step 110 of determining, based on at least an ID of said wireless user device, whether said wireless user device is known to said at least one access point and, if said wireless user device is known to said at least one access point, a step 111 of granting network access to said wireless user device. On the other hand, if said wireless user device is not known to said at least one access point, the method comprises a step 112 of collecting at least one device parameter of said wireless user device and a step 120 of verifying, based on said at least one collected device parameter, whether said wireless user device is allowed to access the network. If said wireless user device is not allowed to access the network, the method further comprises a step 122 of denying network access to said wireless user device, and if said wireless user device is allowed to access the network, the method comprises a step 121of granting network access to said wireless user device.

According to a preferred embodiment the ID of said wireless user device comprises at least an associated physical address of said wireless user device, and the step 110 of determining, based on at least an ID of said wireless user device, whether said wireless user device is known to said at least one access point comprises comparing the associated physical address of said wireless user device with a trusted list configured to comprise physical addresses of wireless user devices allowed access to the network.

According to an embodiment, the authentication method 100 further comprises a step 123 of adding said associated physical address of said wireless user device to the trusted list if said wireless user device is allowed to access the network.

According to a preferred embodiment of the invention the at least one device parameter is comprised in, but not limited to the group comprising a device type, vendor, name, RSSI, operating system and version.

According to an embodiment step 120 of verifying, based on said at least one collected device parameter, whether said wireless user device is allowed to access the network comprises the steps of sending said at least one collected device parameter to a network owner; and receiving confirmation from said network owner of whether said wireless user device is allowed to access the network or not.

According to a preferred embodiment the steps of sending the at least one collected device parameter to the network owner and receiving confirmation from said network owner of whether said wireless user device is allowed to access the network or not are performed via a software application on a computer device of the network owner.

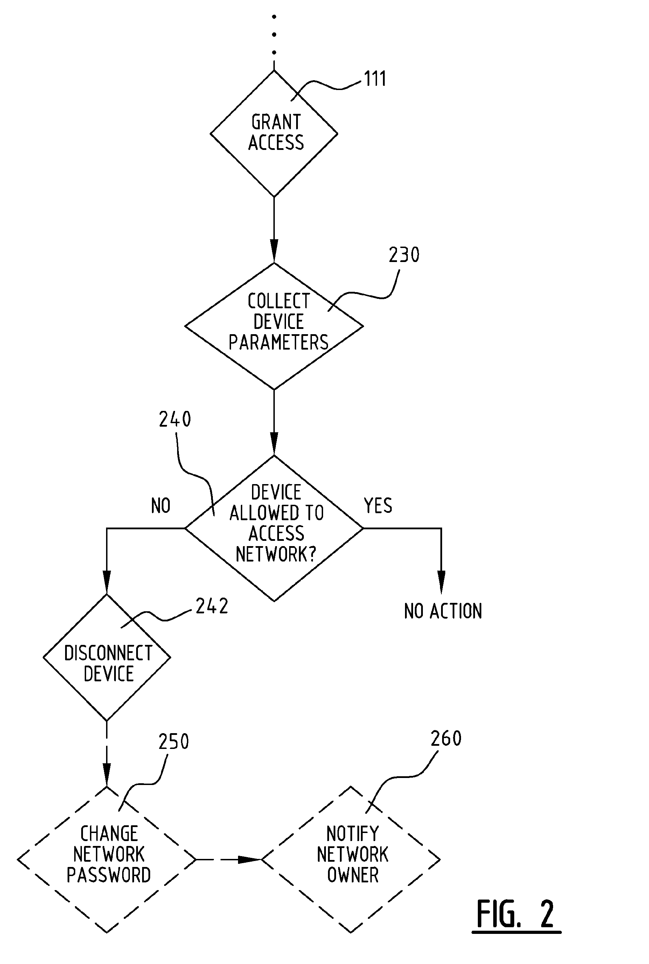

According to a preferred embodiment of the invention, illustrated in figure 2, the authentication method 100 further comprises, if said wireless user device is known to said at least one access point (step 110, figure 1) and has been granted network access (step 111, figure 1): a step 230 of collecting at least one device parameter of said wireless user device, and a step 240 of verifying, based on said at least one collected device parameter, whether said wireless user device is allowed to access the network. If said wireless user device is not allowed to access the network, the authentication method comprises a step 242 of disconnecting said wireless user device from the network. If the device is confirmed to be allowed to access the network, no action is taken.

According to an embodiment, the wireless network is secured by a network password, and the method further comprises a step 250 of changing the network password if said wireless user device is not allowed to access the network.

According to a preferred embodiment, the authentication method 100 further comprises a step 260 of notifying the network owner that the network password has been changed.

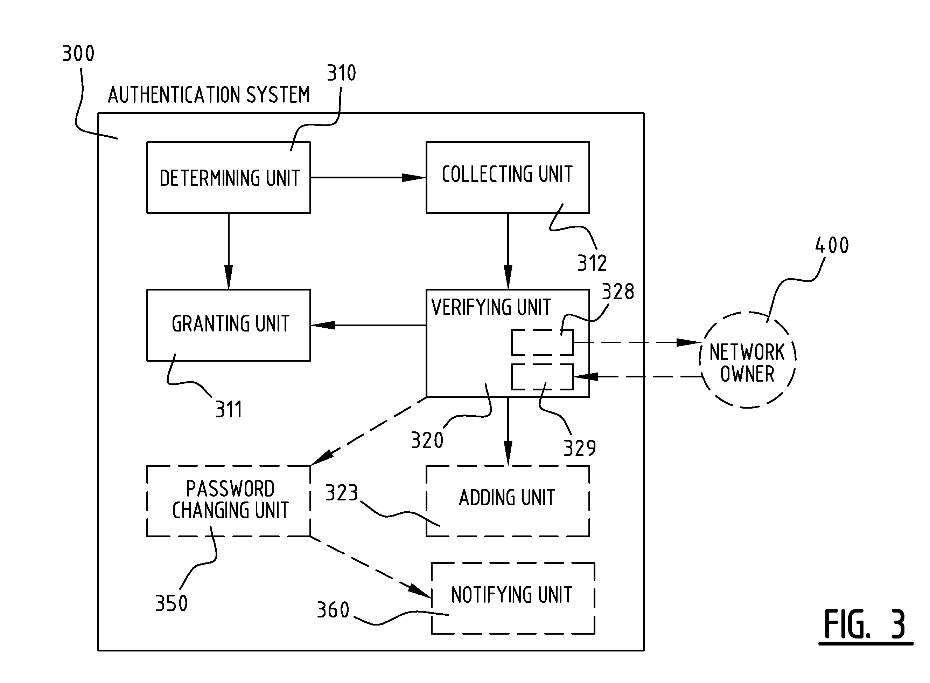

Figure 3 illustrates a wireless user device authentication system 300 in a wireless network comprising at least one access point, where a wireless user device attempts to access the wireless network by connecting to said at least one access point. The authentication system 300 comprises a determining unit 310 configured for determining, based on at least an ID of said wireless user device, whether said wireless user device is known to said at least one access point, and a granting unit 311 configured for granting network access to said wireless user device, if said wireless user device is known to said at least one access point. The authentication system further comprises a collecting unit 312 configured for collecting at least one device parameter of said wireless user device, if said wireless user device is not known to said at least one access point. The system 300 further comprises a verifying unit 320 configured for verifying, based on said at least one collected device parameter, whether said wireless user device is allowed to access the network and for:
denying network access to said wireless user device if said wireless user device is not allowed to access the network; or
granting network access to said wireless user device if said wireless user device is allowed to access the network.

According to an embodiment the ID of said wireless user device comprises at least an associated physical address of said wireless user device, and the determining unit 310 is further configured for comparing the associated physical address of said wireless user device with a trusted list configured to comprise physical addresses of wireless user devices allowed access to the network.

According to an embodiment the authentication system 300 further comprises an adding unit 323, configured for adding said associated physical address of said wireless user device to the trusted list if said wireless user device is allowed to access the network.

According to a preferred embodiment, the verifying unit 320 further comprises a sending unit 328 configured for sending said at least one collected device parameter to a network owner 400, and a receiving unit 329 configured for receiving confirmation from said network owner 400 of whether said wireless user device is allowed to access the network or not.

According to an embodiment, the collecting unit 312 is further configured for collecting at least one device parameter of said wireless user device, if said wireless user device is known to said at least one access point; and the verifying unit 320 is further configured for disconnecting said wireless user device from the network if said wireless user device is not allowed to access the network.

According to an embodiment of the invention, the wireless network is secured by a network password, and the authentication system 300 further comprises a password changing unit 350 configured for changing the network password if said wireless user device is not allowed to access the network.

According to a preferred embodiment, the authentication system 300 further comprises a notifying unit 360, configured for notifying the network owner 400 that the network password has been changed.

According to a preferred embodiment, the notifying unit 360 is further configured for sending a new network password to the network owner 400.

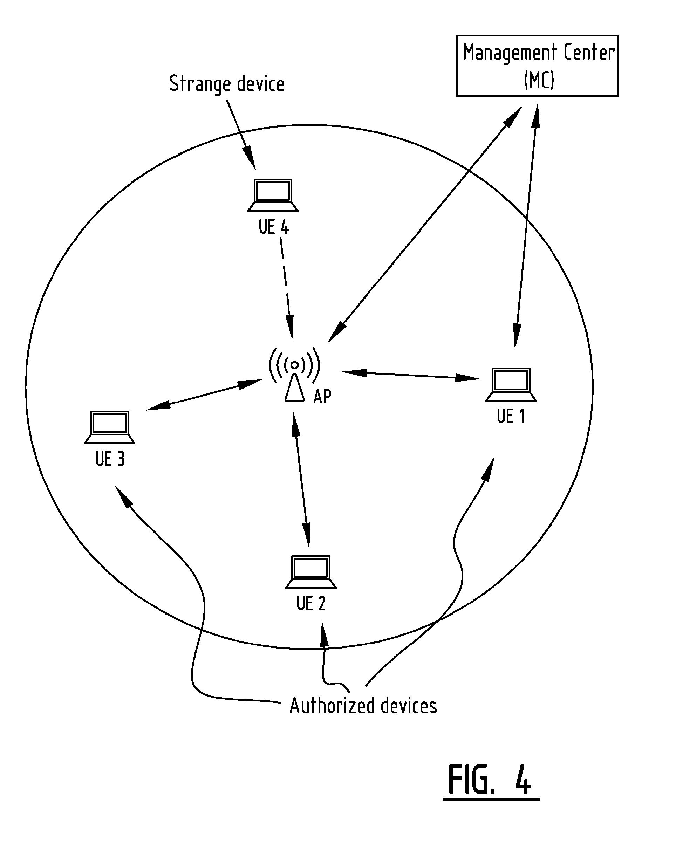

Figure 4 illustrates an example of a typical home wireless network such as a WLAN. The target wireless network contains three authorized wireless user devices or user entities (UE1, UE2 and UE3) and there is one strange wireless user device (UE4) that attempts to connect to the wireless network. The goal of the invention is to restrict the wireless user devices that can associate with the AP to those of the allowed physical addresses (trusted list), prevent malicious intruders and, at the same time, enable a dynamic reconfiguration if new wireless user devices are introduced in the network. By utilizing the management center (MC) of the operator both the list of the allowed MAC addresses (trusted list) and the size of the DHCP pool can by dynamically updated, if confirmation is given by the network owner that a wireless user device is authorized and can be associated to the wireless network.

In this case, the AP will have a trusted list of the allowed physical addresses that can associate to the AP. In addition, the DHCP pool can be limited to the number of the wireless user devices that are already associated. When a strange device tries to associate with the AP, the AP will send the physical address of the strange device to the MC. Consequently, the MC and/or the AP will estimate and collect the device parameters (vendor, type, etc.). The MC will interact with the end user through a specific software application on the PC (or smartphone, or tablet) of the network administrator and a password for the application will be sent to the administrator's mobile phone number. This is to make the authentication method more immune against malicious attacks such as identity theft. After the confirmation of the network administrator through the password, a message will appear on the administrator's software application software informing him that a device (stating its physical address, its type, its vendor, its name, etc.) that is not in the trusted list, tries to connect to the Wifi network. Upon the response of the administrator, the MC will behave in one of two distinct manners. If the administrator responded by saying this is an authorized device and can be connected, the MC will automatically reconfigure the AP accordingly, where the physical address of this device will be added to the trusted list and the DHCP pool will be modified accordingly. If the administrator does not acknowledge this strange device, the association of this device will be denied and its physical address will be listed in a blacklist.

The idea of embodiments of the invention is to limit the devices that can be associated to an access point (AP) by utilizing joint use of physical device identifiers control and the size of the dynamic host configuration protocol (DHCP) pool, optionally along with a shared key (password) utilizing for example the most robust encryption scheme, namely Wi-Fi Protected Access II (WPA2). The allowed physical layer identifiers list (trusted list) and the DHCP pool size are dynamically updated through the operator's management center (MC). This way the need for the manual configuration of the AP by the end user is eliminated. In particular, there will be an interaction between the MC and the network owner through an application software installed on the network owner's PC. In order to prevent the risk of possible network owner's identity theft and getting a copy of the software by a hacker, the MC will send a message to the mobile phone of the network owner containing a password that will be used in the application software. If an intruder is detected, the MC will automatically change the WiFi password and notify the network owner.

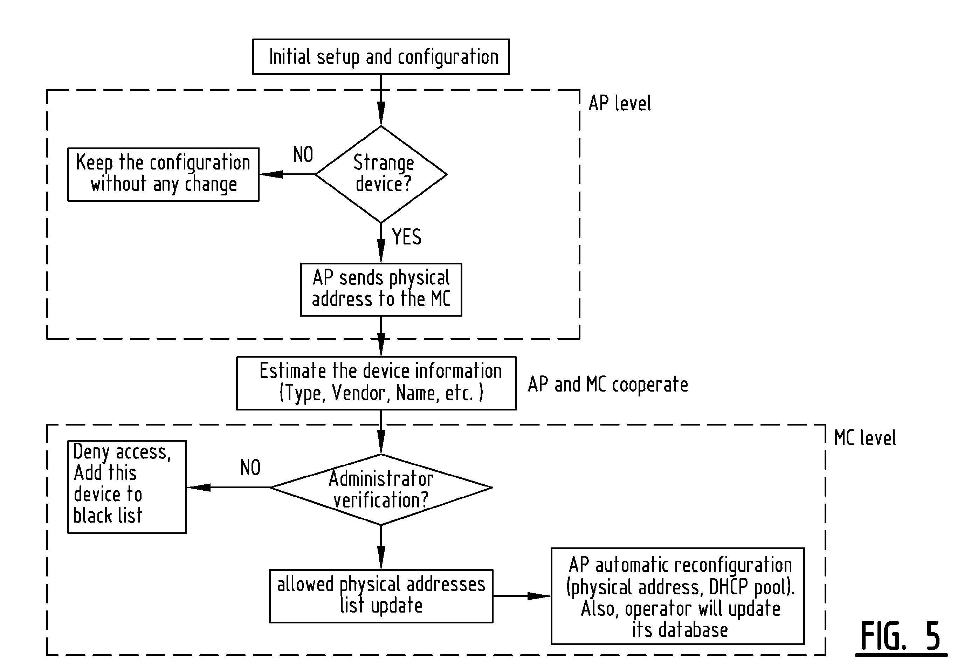

Figure 5 illustrates a flowchart of a further embodiment of the method according to the invention. The steps of the proposed method are summarized as follows:
1) During the installation phase of the AP, it should be configured (through the trusted list and/or DHCP pool) that only the network administrator is allowed to associate to the AP via WiFi. New devices will be added automatically after confirmation of the network administrator.
2) The AP examines each device that tries to associate to determine whether it is a strange device or not. This can be done based on the ID or physical address of the strange device.
   a. If the device was not strange and had the correct password, it will be able to associate without any change in the configuration
   b. If the device was strange (not included in the trusted list), the AP will send the physical address to the MC, then the AP and the MC will collaborate to estimate and collect device parameters by identifying the strange device specifications like type, vendor, name, etc.
3) The MC will verify the identity/parameters of the strange device with the network administrator.
   a. If the administrator did not recognize the device, the access will be denied and the device will be added to the blacklist of potential intruders. The MC will consider that an intruder is detected and the MC will report this information to the end user (network owner/ administrator).
   b. If the administrator verified the device, the trusted list will be updated. Then, the AP should be reconfigured to include this device in the trusted list of known devices. Also, the operator should update his data base. In this case, the device should be able to connect to the AP by using the correct password.

Up till now, any device that has the correct password and its physical address is included in the trusted list will be able to associate with or connect to the wireless network. In order to detect and prevent malicious behavior such as identity theft and password hacking, some precautions should be taken into account where every device that is associated/connected will be examined by the MC. In particular, the MC will supervise and collaborate with the AP to make some measurements of device parameters (such as RSSI, host name, device type, operating system and its version) of each associated/connected device. These measurements can be utilized to determine whether there is an intruder or not. If an intruder is detected, all the devices will be disconnected and an emergency reconfiguration of the AP (changing the WiFi access password). Then, the MC will send a message to the network owner's mobile phone to indicate that a malicious attack is determined in the network and/or that the password has been changed.

A couple of scenarios are considered in which attacks on the wireless network are carried out and how this can be identified by the authentication methods and/or authentication systems according to the invention. In addition, the self-configuring nature of the authentication method/system will be discussed.

**Scenario 1:** The intruder made an identity theft of the administrators PC and hacked the WiFi password. Moreover, to make the scenario worse, the intruder was able to get a copy of the software application that could interact with the MC. The described authentication method will determine this intrusion behavior, since the MC will send a message to the network administrator's mobile phone containing a password that should be used in the application software to interact with the MC. In this case the intruder will not be able to get this password and thus will be detected. An automatic change of the WiFi password will be carried out by the MC and the network administrator will be notified.

**Scenario 2:** The intruder hacked the WiFi password and made spoofing to the physical address of one of the already connected known wireless user devices. In this case, the MC will be able to determine that there are two wireless user devices that have the same physical address in the network. Therefore the MC will recognize that one of them is an intruder. Then, device parameters of both these devices will collected and examined (host name, device type, RSSI, operating system etc). For example, the host name, the device type and the operating system, of both devices, will be compared with the MC database to distinguish between the intruder and trusted known device. In addition, the RSSI may be used, because most probably the intruder's RSSI will be weaker than the RSSI of the known, trusted device. Subsequently, the MC will change the WiFi password and notify the network administrator.

**Scenario 3:** The intruder hacked the WiFi password and made spoofing to the physical address of one of the known, trusted devices that is not connected to the network at the moment. In such a situation, the MC should collect device parameters to get host name, device type, RSSI, operating system, etc. The host name, the device type and the operating system will be compared with the MC database to identify whether the device is an intruder or a known, trusted device. If the device was recognized as an intruder, the MC will change the WiFi password and notify the network administrator.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A wireless user device authentication method in a wireless network comprising at least one access point, where a wireless user device attempts to access the wireless network by connecting to said at least one access point, the method comprising the steps of;
- determining, based on at least an ID of said wireless user device, whether said wireless user device is known to said at least one access point;
- if said wireless user device is known to said at least one access point:
- granting network access to said wireless user device; or
- if said wireless user device is not known to said at least one access point:
- collecting at least one device parameter of said wireless user device;
- verifying, based on said at least one collected device parameter, whether said wireless user device is allowed to access the network;
- if said wireless user device is not allowed to access the network:
- denying network access to said wireless user device;
- if said wireless user device is allowed to access the network:
- granting network access to said wireless user device.

2. The authentication method according to claim 1, wherein the ID of said wireless user device comprises at least an associated physical address of said wireless user device, and wherein determining, based on at least an ID of said wireless user device, whether said wireless user device is known to said at least one access point comprises comparing the associated physical address of said wireless user device with a trusted list configured to comprise physical addresses of wireless user devices allowed access to the network.

3. The authentication method according to claim 2, further comprising adding said associated physical address of said wireless user device to the trusted list if said wireless user device is allowed to access the network.

4. The authentication method according to any one of the claims 1 to 3, wherein said at least one device parameter is comprised in, but not limited to the group comprising a device type, vendor, name, RSSI, operating system and version.

5. The authentication method according to any one of the preceding claims, wherein verifying, based on said at least one collected device parameter, whether said wireless user device is allowed to access the network comprises the steps of:
- sending said at least one collected device parameter to a network owner; and
- receiving confirmation from said network owner of whether said wireless user device is allowed to access the network or not.

6. The authentication method according to claim 5, wherein the steps of sending said at least one collected device parameter to the network owner and receiving confirmation from said network owner of whether said wireless user device is allowed to access the network or not are performed via a software application on a computer device of the network owner.

7. The authentication method according to any one of the preceding claims, further comprising the steps of:
- if said wireless user device is known to said at least one access point and has been granted network access:
- collecting at least one device parameter of said wireless user device;
- verifying, based on said at least one collected device parameter, whether said wireless user device is allowed to access the network;
- if said wireless user device is not allowed to access the network:
- disconnecting said wireless user device from the network.

8. The authentication method according to claim 7, wherein said wireless network is secured by a network password, further comprising the steps of:
- if said wireless user device is not allowed to access the network:
- changing the network password.

9. The authentication method according to claim 8, further comprising a step of:
- if said wireless user device is not allowed to access the network:
- notifying the network owner that the network password has been changed.

10. The authentication method according to claim 9, wherein notifying the network owner that the network password has been changed comprises sending a new network password to the network owner.

11. A wireless user device authentication system in a wireless network comprising at least one access point, where a wireless user device attempts to access the wireless network by connecting to said at least one access point, the system comprising;
- a determining unit configured for determining, based on at least an ID of said wireless user device, whether said wireless user device is known to said at least one access point;
- a granting unit configured for granting network access to said wireless user device, if said wireless user device is known to said at least one access point;
- a collecting unit configured for collecting at least one device parameter of said wireless user device, if said wireless user device is not known to said at least one access point;
- a verifying unit configured for
verifying, based on said at least one collected device parameter, whether said wireless user device is allowed to access the network;
denying network access to said wireless user device if said wireless user device is not allowed to access the network; and
granting network access to said wireless user device if said wireless user device is allowed to access the network.

12. The authentication system according to claim 11, wherein the verifying unit further comprises:
a sending unit configured for sending said at least one collected device parameter to a network owner; and
a receiving unit configured for receiving confirmation from said network owner of whether said wireless user device is allowed to access the network or not.

13. The authentication system according to claim 11 or 12, wherein the collecting unit is further configured for collecting at least one device parameter of said wireless user device, if said wireless user device is known to said at least one access point; and the verifying unit is further configured for disconnecting said wireless user device from the network if said wireless user device is not allowed to access the network.

14. The authentication system according to claim 13, wherein said wireless network is secured by a network password, further comprising a password changing unit configured for changing the network password if said wireless user device is not allowed to access the network.

15. A computer program product comprising computer-executable instructions for performing the method of any one of the claims 1 to 11, when the program is run on a computer.
